# FASCICULE DE BREVET EUROPEEN

(11) **EP 1 648 202 B1**
(45) Date de publication et mention de la délivrance du brevet: **09.12.2009**
(21) Numéro de dépôt: 05109161.9
(22) Date de dépôt: 04.10.2005
(51) Int. Cl.: H05B 6/64, A47J 36/02

(54) **Four à micro-ondes et plat vapeur intégré dans un four à micro-ondes pour l'optimisation de la cuisson à la vapeur dans ledit four**
Mikrowellenofen und integriertes Dampfutensil in einem Mikrowellenofen zur Optimierung des Dampfkochens in diesem Ofen
Microwave oven and integrated steam utensil in a microwave oven for optimizing steam cooking in an oven

(30) Priorité: 13.10.2004 FR 0410829
(43) Date de publication de la demande: 19.04.2006
(73) Titulaire: FagorBrandt SAS, 92854 Rueil Malmaison Cedex (FR)
(72) Inventeur: Bouron, Jean-François, 85190, Aizenay (FR); Bouirdene, Abdelaaziz, 85190, Aizenay (FR); Prat, Thierry, 85190, Aizenay (FR)

(56) Documents cités:
- FR-A- 2 501 031
- GB-A- 2 246 949

## Description

La présente invention est relative à un four à micro-ondes comprenant une cavité, au moins une sortie d'ondes pour alimenter la cavité en micro-ondes et un plat vapeur pour la cuisson d'aliments à la vapeur.

En particulier le plat vapeur comporte un plat creux transparent aux micro-ondes et constituant un réceptacle de liquide, un plat support d'aliments étanche aux micro-ondes positionné sur ledit plat réceptacle de liquide et percé de trous laissant passer la vapeur dudit plat réceptacle de liquide vers ledit plat support d'aliments, un couvercle étanche aux micro-ondes positionné sur ledit plat support d'aliments.

Un tel four équipé d'un plat vapeur similaire est décrit dans le brevet français de numéro de publication 2501031. Dans ce brevet, il est décrit un four à micro-ondes comportant un plat vapeur ayant un plat réceptacle de liquide transparent aux micro-ondes, une cuvette réalisant une barrière aux micro-ondes et contenant un support d'aliments, et un couvercle réalisant un écran aux micro-ondes. Le plat est posé directement sur la sole et soumis à une alimentation de micro-ondes par le dessus. Dans une telle réalisation, la vitesse de chauffage du liquide n'est pas optimale car le liquide est éloigné de l'alimentation en micro-ondes et les pertes d'énergies liées à des réflexions multiples sont importantes.

De la même manière les dimensions du plat vapeur sont limitées du fait de ces mêmes pertes. En effet, pour que suffisamment d'énergie parvienne au liquide il faut laisser un espace conséquent entre les parois de la cavité du four à micro-ondes et les parties métalliques du plat vapeur.

La présente invention se propose de résoudre ce problème et de réaliser des plats vapeur de dimensions plus importantes tout en améliorant les performances en temps de cuisson des aliments.

La présente invention concerne un four à micro-ondes comprenant une cavité, au moins une sortie d'onde pour alimenter la cavité en micro-ondes, un plat vapeur comportant un plat creux transparent aux micro-ondes et constituant un plat réceptacle de liquide, un plat support d'aliments étanche aux micro-ondes positionné sur ledit plat réceptacle de liquide et percé de trous laissant passer la vapeur dudit plat réceptacle de liquide vers ledit plat support d'aliments, un couvercle étanche aux micro-ondes positionné sur ledit plat support d'aliments caractérisé en ce que ledit plat support d'aliments a son fond positionné au dessus d'au moins le haut de la sortie d'ondes la plus basse.

Un tel four permet de chauffer l'eau plus directement le liquide de sorte qu'un maximum d'énergie soit envoyée sur le liquide.

Selon une autre caractéristique préférée de l'invention, la zone entre le fond du plat support d'aliments et la surface supérieure du liquide contenu par le plat réceptacle de liquide forme un propagateur d'ondes.

De ce fait l'énergie micro-ondes est canalisée entre ces deux surfaces et va se concentrer régulièrement sur toute la surface occupée par le liquide. Cela permet un chauffage plus efficace du liquide à sa surface supérieure. De plus, l'absorption d'énergie micro-ondes est plus importante par le fait que ce système présente une impédance adaptée à la sortie d'ondes.

Le champ électromagnétique sortant verticalement de la fente peut être propagé entre les deux surfaces constituées par la surface supérieure du liquide et le dessous du plat support aliments et est absorbée sur une grande surface du liquide.

Selon une caractéristique préférée de l'invention, ladite zone en creux dudit plat réceptacle de liquide a une longueur L supérieure ou égale à 70% de la largeur L' de la cavité du four à micro-ondes.

L'avantage d'un plat de plus grande dimension augmente la surface d'échange d'énergie entre les aliments et la vapeur assurant une bonne homogénéité de la cuisson.

Un autre avantage de l'augmentation de la taille du plat est la possibilité d'avoir un système de cuisson globalement plat facilitant l'utilisation dudit plat vapeur.

Selon une caractéristique préférée de l'invention, la cavité comporte des gradins sur ses parois latérales pouvant supporter le plat vapeur.

Ainsi le plat vapeur peut être directement surélevé par l'intermédiaire des gradins du four ce qui permet d'adapter parfaitement la taille du plat à la taille de la cavité tout en conservant une taille maximale au plat vapeur.

Un tel four comportant des gradins sur ses parois latérales permet de positionner à volonté le plat vapeur en fonction de la position verticale de la sortie d'ondes. Ce plat vapeur est adaptable à un four existant.

Selon une caractéristique préférée de l'invention, le liquide contenu dans le plat réceptacle de liquide est de l'eau.

Selon un autre aspect de l'invention, le plat réceptacle de liquide peut servir de plat de cuisson traditionnel.

En effet, le plat support de liquide occupant une surface optimisée par rapport à la taille du four, il peut servir de plat traditionnel placé sur des gradins pour des cuissons d'une nature différente des cuissons vapeur.

D'autres caractéristiques et avantages apparaîtrons à la lecture de la description ci-après.

Aux dessins annexés donnés uniquement à titre d'exemple :
- la figure 1 illustre une vue d'ensemble d'un four à micro-ondes comprenant un plat vapeur conforme à l'invention,
- la figure 2 montre une coupe du plat vapeur,
- la figure 3 est une vue de dessous du plat support d'aliments,
- la figure 4 représente le positionnement du plat vapeur dans le four à micro-ondes et son positionnement relatif à la sortie d'ondes la plus basse,
- la figure 5 représente le cheminement des ondes dans le propagateur d'ondes constitué par le fond du plat support d'aliments et par la surface supérieure du liquide.

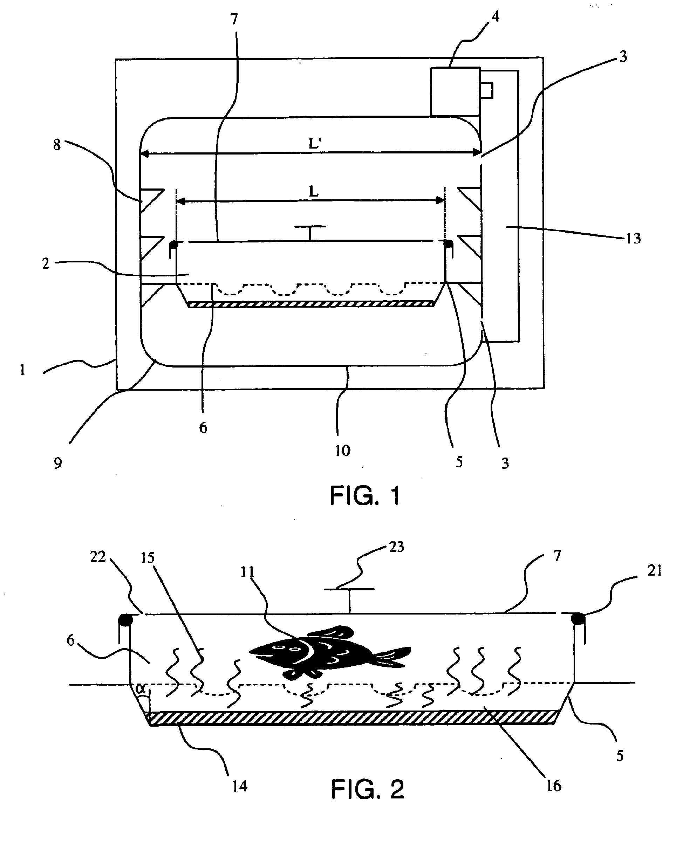

On va décrire tout d'abord en référence à la figure 1 un four à micro-onde 1 conforme à l'invention et, plus particulièrement, un four à micro-ondes 1 permettant la cuisson d'aliments à la vapeur.

On notera que la figure 1 est schématique et que de nombreux organes nécessaires au fonctionnement du four ont été omis et n'ont pas besoin d'être décrits en détail ici.

Ce four à micro-ondes est adapté à cuire des aliments. Ce four à micro-ondes comporte une cavité 9 alimentée en énergie micro-ondes par au moins une sortie d'ondes 3.

L'énergie fournie par la source de micro-ondes 4 est préférentiellement à une fréquence de 2,45GHz.

Dans cet exemple en figure 1, il est présenté un four 1 comportant préférentiellement deux sorties d'ondes 3 placées sur un côté de la cavité 9, l'une étant sur le haut du côté et l'autre sur le bas de ce même côté. Bien d'autres dispositions des sorties d'ondes 3 existent, et la présente invention n'est pas limitée à la solution illustrée par la figure 1.

Le four à micro-ondes 1 décrit dans l'invention ci-présente comporte deux sorties d'ondes 3. Ces deux sorties d'ondes servent à obtenir les meilleures conditions de cuisson dans ledit four à micro-ondes 1 lorsque les micro-ondes sont utilisées directement pour la cuisson.

La cavité 9 du four 1 est adaptée notamment à supporter des plats de cuisson. Dans cet exemple de réalisation, le plat utilisé est un plat vapeur 2.

L'énergie micro-ondes est issue d'une source de micro-ondes 4 qui débite l'énergie dans un guide d'ondes 13 dont la fonction est d'adapter électromagnétiquement la source de micro-ondes 4 à la cavité 9.

Le four à micro-ondes 1 illustré en figure 1 a une cavité 9 comprenant des gradins 8 pour supporter les plats de cuisson. Le four à micro-ondes 1 représenté sur la figure 1 ne comporte pas de plateau tournant. Néanmoins, l'invention décrite dans le cas présent fonctionne de la même manière avec un tel accessoire souvent présent dans les cavités de four à micro-ondes.

Préférentiellement, le plat vapeur 2 occupe un volume important dans la cavité et, plus particulièrement, a une largeur proche de la largeur de la cavité. A la figure 1, le plat support d'aliments 6, faisant partie du plat vapeur 2, est de largeur L et la cavité 9 est de largeur L'. De préférence, le ratio entre la largeur L du plat support d'aliment 6 du plat vapeur 2 et la largeur L' de la cavité 9 est d'au moins 70%.

La figure 2 illustre le plat vapeur 2 constitué du plat réceptacle du liquide 5, du plat support aliments 6 et d'un couvercle 7.

Le plat support aliments 6 est percé de trous 17 où passe la vapeur du liquide afin de cuire les aliments situés au-dessus dudit plat réceptacle du liquide 5. Ce plat support d'aliments 6 est constitué d'un matériau faisant barrière aux micro-ondes, et préférentiellement un métal comme par exemple un acier inoxydable. De par sa forme et le maillage de trous 17 réalisé dans le fond dudit plat support aliments 6, la vapeur générée au cours de la cuisson peut passer à travers cette paroi mais les micro-ondes sont réfléchies par cette surface.

Le couvercle 7, préférentiellement du même matériau que le plat support d'aliments 6, est placé sur ledit plat support aliments 6 en assurant une liaison laissant faiblement pénétrer les micro-ondes. Idéalement, cette liaison ne laisse pénétrer aucune micro-onde dans la cavité constituée par le plat support d'aliment 6 et le couvercle 7. Toutefois, les problèmes « d'arquing », c'est-à-dire la création d'arcs électriques entre deux surfaces métalliques, nécessitent de laisser un espace entre le couvercle 7 et le plat support d'aliments 6. Préférentiellement, cet espace entre le plat support d'aliments 6 et le couvercle 7 est créé par un joint 21 qui assure l'étanchéité entre ces deux pièces.

La liaison entre le plat réceptacle du liquide 5 et le plat support aliments 6 est préférentiellement étanche afin d'éviter tout débordement de liquide 14 lors de la manipulation de celui-ci, et d'éviter la diffusion de vapeur dans la cavité.

Cette étanchéité peut se faire par tout moyen comme par exemple à l'aide d'un joint placé entre le plat réceptacle du liquide 5 et le plat support d'aliments 6, ou par la réalisation d'un épaulement dans le fond du plat support d'aliments 6 qui se place en vis à vis du rebord de la zone en creux du plat réceptacle de liquide 5.

Afin que la cuisson des aliments ne se fasse pas sous pression il est nécessaire de ménager des fuites dans le plat vapeur 2. Celles ci seront préférentiellement faites par l'intermédiaire de trous 22 ménagés dans le couvercle 7. Cette position est la meilleure car la vapeur 15 générée sous les aliments a pu les traverser et les échauffer avant d'être partiellement évacuée par lesdits trous 22.

Ces trous 22 sont préférentiellement ménagés en périphérie du couvercle 7 pour éviter l'échauffement de la poignée 23 du couvercle 7 placée au centre.

Dans cet exemple, le plat support aliments 6 comporte des emboutis 16 pour permettre le bon égouttage de l'eau de condensation qui se crée sur le fond du plat support d'aliments 6, les gouttes retombent ainsi dans le plat réceptacle de liquide 5. Par ailleurs, ces emboutis 16 peuvent servir au maintien d'oeufs en place dans le plat support d'aliments 6. Dans cet exemple de réalisation où le plat vapeur 2 est de forme rectangulaire, les dimensions extérieures du plat réceptacle de liquide 5 préférentielles à l'invention sont de 339mm de large pour 325mm en profondeur et les dimensions de la zone en creux dudit plat réceptacle de liquide 5 sont de 280mm de large pour 250mm de profondeur et 32mm de hauteur. Préférentiellement, la hauteur utile du plat réceptacle de liquide 5 lorsque le plat support d'aliments 6 est en place dans celui-ci est de 22mm. En utilisant une hauteur de liquide 14 de 10mm dans le plat réceptacle de liquide 5, on obtient la meilleure adaptation de la cavité 9 du four à micro-ondes 1 en tenant compte de la forme et de la taille du plat vapeur 2. Cette hauteur de liquide 14 de 10mm permet de favoriser une pénétration rapide des micro-ondes dans le liquide 14 sans nécessiter un échange thermique de convection.

Dans le cadre de la réalisation décrite précédemment, le plat réceptacle de liquide 5 est le plus grand possible pour contenir le volume de liquide 14 nécessaire à la cuisson des aliments par la vapeur. Le volume de liquide 14 est réparti de manière uniforme sur toute la surface du plat réceptacle de liquide 5. L'avantage de cette réalisation est d'avoir une hauteur de liquide 14 faible permettant de réduire le temps de génération de la vapeur et donc les temps de cuisson des aliments 11 par la vapeur.

Le volume de liquide 14 versé préférentiellement dans le plat réceptacle de liquide 5 est de 0,64L.

Le plat vapeur 2 décrit précédemment permet de cuire des aliments 11 de taille importante. Notamment, on peut cuire des poissons entiers dans le plat vapeur 2 cité ci-dessus.

Le plat vapeur 2 utilisé dans le four à micro-ondes 1 permet de cuire différents types d'aliments tels que des légumes, des fruits, des céréales mais encore des viandes ou des poissons comme décrit précédemment.

Le plat réceptacle de liquide 5 est réalisé dans un matériau transparent aux micro-ondes. Le verre est utilisé de préférence pour l'invention, mais une matière plastique ou céramique pourrait convenir. Bien évidemment, le matériau utilisé pour le plat vapeur 2 doit résister à une température minimum de 100°C pour permettre au liquide 14 de rentrer en ébullition si le liquide 14 est de l'eau.

Le plat support aliments 6 est fabriqué en aluminium ou en acier inoxydable ou encore dans un autre matériau à condition que le matériau dudit plat support aliments 6 soit réfléchissant pour les micro-ondes.

Les dimensions de la section du plat support aliments 6 à sa base sont approximativement égales aux dimensions de la section interne du plat réceptacle du liquide 5. De cette façon, lorsque le plat support aliments 6 est placé dans le plat réceptacle du liquide 5, ledit plat support aliments 6 est bloqué en déplacement dans le plan horizontal dudit plat réceptacle du liquide 5.

Le plat réceptacle du liquide 5 est légèrement évasé afin de faciliter le placement du plat support aliments 6. Dans l'exemple de réalisation, l'angle de dépouille α du plat réceptacle du liquide est d'environ 15°.

Les caractéristiques du plat vapeur 2 permettent de définir un ensemble esthétique de par ses formes et les matériaux utilisés.

La préhension du plat vapeur 2 est aisée grâce aux rebords du plat réceptacle du liquide 5 qui sont utilisés à la fois pour reposer le plat vapeur 2 sur les gradins 8 et comme poignées pour sortir le plat vapeur 2 du four 1.

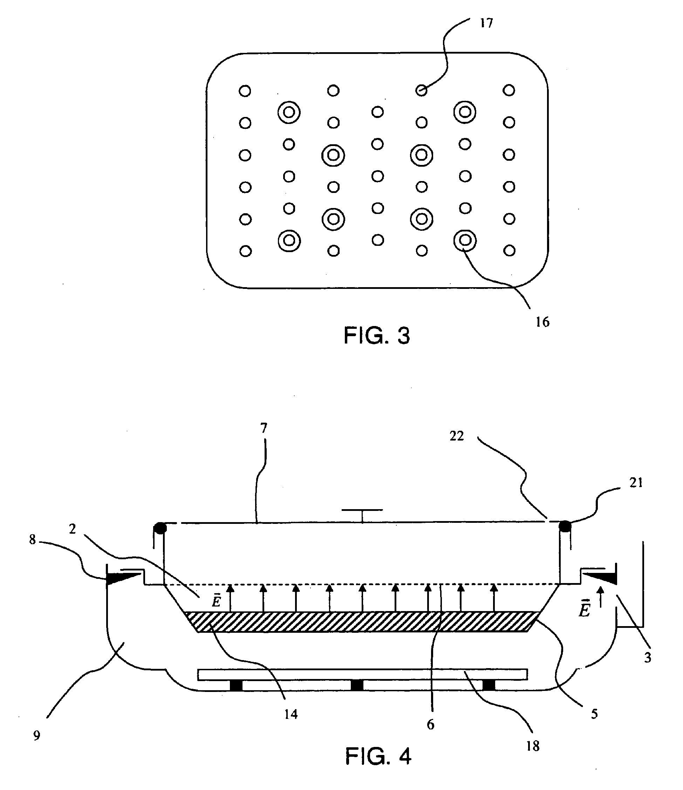

Comme bien illustré sur la figure 3 et comme décrit précédemment, le plat support aliments 6 est percé de trous 17 laissant passer la vapeur. Le dimensionnement des trous 17 de passage de la vapeur doit être optimisé pour obtenir les meilleures conditions de cuisson sans que les micro-ondes ne puissent passer au travers.

Dans l'exemple de réalisation, la valeur des trous 17 de passage de la vapeur dans le plat support aliments 6 est d'environ 6mm. Ces trous 17 sont répartis en quinconce et espacés d'un entraxe de 12mm.

Ce mode de réalisation est mis au point pour une fréquence d'émission des micro-ondes de 2,45GHz mais n'est nullement limitatif pour une fréquence d'émission des micro-ondes autre que celle définie.

De cette façon, les micro-ondes sont bloquées en dehors de l'ensemble formé par le plat support aliments 6 et le couvercle 7.

On va décrire à présent le positionnement du plat vapeur 2 par rapport aux sorties d'ondes 3 conforme à l'invention.

Comme illustré sur la figure 4, le haut de la sortie d'ondes 3 la plus basse dans la cavité 9 est dans le même plan que le fond du plat support aliments 6. Cette configuration choisie préférentiellement dans ce mode de réalisation permet de propager les ondes entre le fond du plat support aliments 6 et la partie supérieure du liquide 14.

Le champ électromagnétique *E̅*sort verticalement de la sortie d'ondes 3 et se propage entre les deux surfaces constituées par la surface supérieure du liquide 14 et le fond du plat réceptacle du liquide 5.

Le liquide 14 joue un rôle de diélectrique qui absorbe partiellement le champ de micro-ondes alors que le plat support d'aliment 6 réfléchit ledit champ de micro-ondes de manière quasi totale. Ainsi le champ de micro-ondes se propage suffisamment loin entre les deux surfaces pour que l'échauffement du liquide se fasse sur toute sa surface permettant une optimisation de son chauffage.

On va décrire à présent le principe de diffusion des ondes entre la couche supérieure du liquide 14 et le fond du plat support aliments 6.

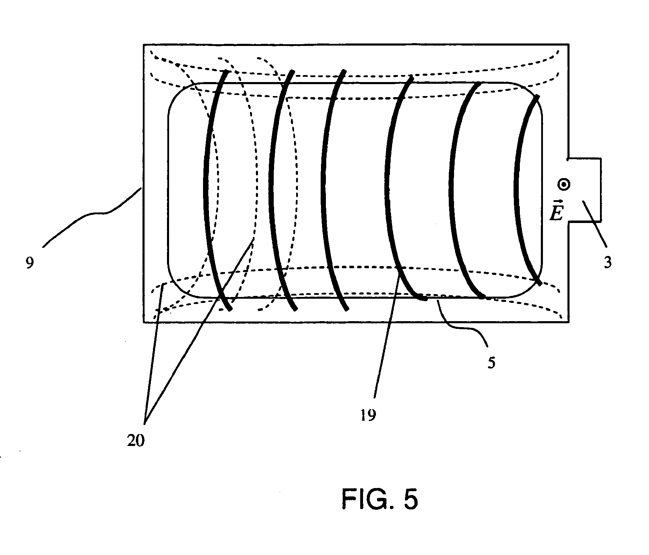

On a illustré sur la figure 5 le plat vapeur à l'intérieur de la cavité en vue de dessus soumis aux lignes de champ électrique.

A l'intérieur du four à micro-ondes 1 est monté de manière connue un magnétron 4, générateur de micro-ondes et un guide d'ondes 13 pour coupler le magnétron 4 à la cavité 9. Les lignes de champ électrique incidentes 19 sont diffusées entre les deux surfaces constituées par le fond du plat support d'aliment 6 et la surface supérieure du liquide 14. Celles-ci traversent la cavité 9 dans sa largeur et sont réfléchies par la paroi opposée, générant ainsi un champ de micro-ondes réfléchi représenté par les lignes de champ réfléchies 20.

Le liquide 14 contenu dans le plat réceptacle de liquide 5 est chauffé sur toute sa surface. Les micro-ondes diffusées sous le plat réceptacle de liquide 5, traversent ledit plat réceptacle de liquide 5 transparent aux micro-ondes et sont absorbées par le liquide 14 pour créer de la chaleur et par conséquent de la vapeur 15.

Les micro-ondes diffusées dans la cavité 9 par la sortie d'ondes 3 la plus basse sont concentrées sur les deux faces du liquide. On obtient ce résultat par la position de la sortie micro-ondes 3 au niveau du liquide 14 comme décrit précédemment.

Les micro-ondes parcourent de cette façon le plus court chemin pour être absorbées par le liquide 14. D'où la faible perte d'énergie dans cette réalisation permettant l'accélération des paramètres de cuisson des aliments par la vapeur 15 dans un four à micro-ondes 1.

Ainsi, ce four à micro-ondes 1 ne nécessite pas de plateau tournant 18 pour répartir le flux de micro-ondes.

Ce principe de cuisson à la vapeur dans un four micro-ondes est applicable pour les fours posables et encastrables.

L'avantage de cette invention est d'utiliser un plat réceptacle de liquide 5 pour la cuisson des aliments par la vapeur 15 mais ledit plat réceptacle de liquide 5 peut également servir pour réaliser des cuissons traditionnelles dans un four à micro-ondes 1 tel que décrit précédemment. Ce plat réceptacle de liquide 5 est dimensionné pour réaliser une réserve de liquide 14 pour le plat vapeur 2. La profondeur du plat réceptacle de liquide 5 permet également de préparer des plats en sauce.

Bien entendu, la présente invention n'est pas limitée aux exemples de réalisation décrits précédemment.

En particulier, les gradins 8 de positionnement du plat vapeur 2 dans la cavité 9 pourraient être remplacés par un surélévateur permettant de placer le propagateur d'ondes en face de la sortie d'ondes.

En outre, les gradins 8 disposés sur les deux parois latérales de la cavité 9 peuvent être remplacés par des glissières en lieu et place.

Enfin, préférentiellement le liquide 14 utilisé dans cette invention est de l'eau, mais il est tout aussi envisageable que le liquide soit de l'eau parfumée ou un alcool permettant de faire des cuissons vapeur particulières.

## Revendications

1. Four à micro-ondes (1) comprenant une cavité (9), au moins une sortie d'onde (3) pour alimenter la cavité (9) en micro-ondes, un plat vapeur (2) comportant un plat creux transparent aux micro-ondes et constituant un plat réceptacle de liquide, (5), un plat support d'aliments (6) étanche aux micro-ondes positionné sur ledit plat réceptacle de liquide (5) et percé de trous (17) laissant passer la vapeur (15) dudit plat réceptacle de liquide (5) vers ledit plat support d'aliments (6), un couvercle (7) étanche aux micro-ondes positionné sur ledit plat support d'aliments (6) **caractérisé en ce que** ledit plat support d'aliments (6) a son fond positionné au dessus d'au moins le haut de la sortie d'ondes (3) la plus basse.

2. Four à micro-ondes selon la revendication 1 **caractérisé en ce que** la zone entre le fond du plat support d'aliments (6) et la surface supérieure du liquide (14) contenu par le plat réceptacle de liquide (5) forme un propagateur d'ondes.

3. Four à micro-ondes selon la revendication 1 **caractérisé en ce que** ladite zone en creux dudit plat support d'aliment (6) a une largeur L supérieure ou égale à 70% de la largeur L' de la cavité (9) du four à micro-ondes (1).

4. Four à micro-ondes selon l'une quelconque des revendications 1 à 3 **caractérisé en ce que** la cavité (9) comporte des gradins (8) sur ses parois latérales pouvant supporter le plat vapeur (2).

5. Four à micro-ondes selon l'une quelconque des revendications 1 à 4 **caractérisé en ce que** la cavité (9) comporte des glissières sur ses parois latérales pouvant supporter le plat vapeur (2).

6. Four à micro-ondes selon l'une quelconque des revendications 1 à 5 **caractérisé en ce que** le liquide (14) contenu dans le plat réceptacle de liquide (5) est de l'eau.

7. Four à micro-ondes selon l'une quelconque des revendications 1 à 6, **caractérisé en ce que** le plat réceptacle de liquide (5) peut servir de plat de cuisson traditionnel.

## Claims

1. Microwave oven (1) comprising a cavity (9), at least one wave output (3) to supply the cavity (9) with microwaves, a steaming dish (2) comprising a hollow dish transparent to microwaves and consisting of a liquid container (5), a food support plate (6) sealed against microwaves positioned on said liquid container (5) and pierced with holes (17) allowing steam (15) to pass from said liquid container (5) to said food support plate (6), a lid (7) sealed against microwaves positioned on said food support plate (6), **characterized in that** the bottom of said food support plate (6) is positioned above at least the top of the lowest wave output (3).

2. Microwave oven according to claim 1, **characterized in that** the zone between the bottom of the food support plate (6) and the upper surface of the liquid (14) contained in the liquid container (5) forms a wave propagator.

3. Microwave oven according to claim 1, **characterized in that** said hollow zone of said food support plate (6) has a width L greater than or equal to 70% of the width L' of the cavity (9) of the microwave oven (1).

4. Microwave oven according to any of claims 1 to 3, **characterized in that** the cavity (9) includes steps (8) on its side walls which can support the steaming dish (2).

5. Microwave oven according to any of claims 1 to 4, **characterized in that** the cavity (9) includes guide rails on its side walls which can support the steaming dish (2).

6. Microwave oven according to any of claims 1 to 5, **characterized in that** the liquid (14) in the liquid container (5) is water.

7. Microwave oven according to any of claims 1 to 6, **characterized in that** the liquid container (5) may be used as a traditional cooking dish.

## Patentansprüche

1. Mikrowellenherd (1) mit einem Garraum (9), mindestens einem Wellenauslass (3), über welchen der Garraum (9) mit Mikrowellen versorgt wird, einer Dampfplatte (2) mit einer mikrowellendurchlässigen Schale, welche als Flüssigkeitsbehälter (5) dient, einem mikrowellenundurchlässigen Gargutträger (6), welcher auf dem besagten Flüssigkeitsbehälter (5) positioniert und mit Löchern (17) versehen ist, durch welche der Dampf (15) des besagten Flüssigkeitsbehälters (5) auf den besagten Gargutträger (6) dringt, einem mikrowellenundurchlässigen Deckel (7), welcher auf dem besagten Gargutträger (6) positioniert ist, **dadurch gekennzeichnet, dass** der Boden des besagten Gargutträgers (6) mindestens oberhalb der Höhe des niedrigsten Mikrowellenauslasses (3) aufliegt.

2. Mikrowellenherd nach Anspruch 1, **dadurch gekennzeichnet, dass** der Bereich zwischen dem Boden des Gargutträgers (6) und der Oberfläche der in dem Flüssigkeitsbehälter (5) enthaltenen Flüssigkeit (14) einen Wellenüberträger bildet.

3. Mikrowellenherd nach Anspruch 1, **dadurch gekennzeichnet, dass** der besagte Hohlbereich des besagten Gargutträgers (6) eine Breite L aufweist, welche größer als oder gleich 70 % der Breite L' des Garraums (9) des Mikrowellenherdes (1) ist.

4. Mikrowellenherd nach einem beliebigen der Ansprüche 1 bis 3, **dadurch gekennzeichnet, dass** der Garraum (9) an seinen Seitenwänden Einschübe (8) aufweist, welche die Dampfplatte (2) aufnehmen können.

5. Mikrowellenherd nach einem beliebigen der Ansprüche 1 bis 4, **dadurch gekennzeichnet, dass** der Garraum (9) an seinen Seitenwänden Schienen aufweist, welche die Dampfplatte (2) aufnehmen können.

6. Mikrowellenherd nach einem beliebigen der Ansprüche 1 bis 5, **dadurch gekennzeichnet, dass** die in dem Flüssigkeitsbehälter (5) enthaltene Flüssigkeit (14) Wasser ist.

7. Mikrowellenherd nach einem beliebigen der Ansprüche 1 bis 6, **dadurch gekennzeichnet, dass** der Flüssigkeitsbehälter (5) als herkömmliches Gargeschirr benutzt werden kann.
